# EUROPÄISCHE PATENTSCHRIFT

(11) **EP 1 575 864 B1**
(45) Veröffentlichungstag und Bekanntmachung des Hinweises auf die Patenterteilung: **11.09.2019**
(21) Anmeldenummer: 03752701.7
(22) Anmeldetag: 16.05.2003
(51) Int. Cl.: B22C 9/00, G01F 11/00, B33Y 30/00, G01F 13/00, B33Y 40/00, B29C 64/153

(54) **VORRICHTUNG ZUM ZUFÜHREN VON FLUIDEN**
DEVICE FOR FEEDING FLUIDS
DISPOSITIF PERMETTANT UNE ALIMENTATION EN FLUIDES

(30) Priorität: 20.05.2002 DE 10222167
(43) Veröffentlichungstag der Anmeldung: 21.09.2005
(73) Patentinhaber: voxeljet AG, 86316 Friedberg (DE)
(72) Erfinder: EDERER, Ingo, D-82269 Hausen b. Geitendorf (DE); HÜHN, Stefan, 86169 Augsburg (DE)
(74) Vertreter: Helbig, Christian
(86) Internationale Anmeldenummer: PCT/DE2003/001587
(87) Internationale Veröffentlichungsnummer: WO 2003/097518

(56) Entgegenhaltungen:
- EP-A- 1 099 534
- WO-A-00/78485
- CH-A- 386 926
- US-A- 2 640 629
- US-A- 4 167 382
- US-A- 4 627 456
- US-A1- 2001 050 448

## Beschreibung

Die vorliegende Erfindung bezieht sich auf eine Vorrichtung zum Zuführen von Fluiden, in Form von Partikelmaterial, aus einem Vorratsbehälter. Weiterhin betrifft die Erfindung auch die Verwendung einer solchen Vorrichtung.

In vielen Bereichen der Technik sollen Fluide und dabei insbesondere Partikelmaterialien in dünnen Schichten auf einen Träger aufgetragen werden können. Hierbei ist es notwendig, dass das Fluid aus einem Vorratsbehälter für eine Dosiervorrichtung zugeführt wird. Beispielsweise spielt bei Rapid-Prototyping-Verfahren die Zufuhr des Fluids eine wichtige Rolle.

Aus der deutschen Patentanmeldung DE 198 53 834 ist ein Rapid-Prototyping-Verfahren zum Aufbau von Gussmodellen bekannt. Hierbei wird unbehandeltes Partikelmaterial auf eine Bauplattform in einer dünnen Schicht aufgetragen. Danach wird ein Bindemittel auf das gesamte Partikelmaterial in einer möglichst feinen Verteilung aufgesprüht. Anschließend wird darüber auf ausgewählte Bereiche ein Härter dosiert, wodurch erwünschte Bereiche des Partikelmaterials verfestigt werden. Nach mehrmaliger Wiederholung dieses Vorgangs kann ein individuell geformter Körper aus dem gebundenen Partikelmaterial bereitgestellt werden.

Aus einer nachveröffentlichten deutschen Patentanmeldung der Anmelderin ist ein Verfahren zum Auftragen von Fluiden bekannt, bei dem das Fluid aus einem nach unten offenen, mit der Klinge schwingenden Behälter zugeführt wird. Die Klinge führt eine Schwingung nach Art einer Drehbewegung oder in vertikaler Richtung aus.

Dieses Verfahren kann vorzugsweise mit einer Vorrichtung zum Auftragen von Fluiden auf einen zu beschichtenden Bereich durchgeführt werden, wobei eine Klinge und eine Dosiervorrichtung vorgesehen ist, mittels der auf den zu beschichtenden Bereich Fluid aufgetragen wird und die Klinge über dem aufgetragenen Fluid verfahren wird und derart angebracht ist, dass sie eine Schwingung ausführen kann. Die Dosiervorrichtung ist als eine Art nach unten offener, das Partikelmaterial enthaltender, mit der Klinge schwingender Trichter ausgestaltet. Der Trichter führt den Partikelmaterialvorrat für zumindest eine Beschichterfahrt über die gesamte Länge des Baufeldes mit.

Die Hauptanforderung an das Zuführsystem ist bei einer derartigen Vorrichtung, dass das Partikelmaterial in einer gleichmäßigen Mengenverteilung in den Trichter, die Dosiervorrichtung zugeführt wird.

Genau diese relativ genaue Dosierung einer bestimmten Menge Partikelmaterial über eine definierte Länge erweist sich als schwierig, wenn das Partikelmaterial wie im vorliegenden Fall zu Agglomeraten neigt.

Aus dem Stand der Technik ist es bekannt, das Partikelmaterial mit Hilfe von Flügelradzellen, Förderbänder etc. einer Dosiervorrichtung zuzuführen. Diese Fördereinrichtungen scheiden jedoch bei der Verwendung von zu Agglomeraten neigendem Partikelmaterial aus.

In der EP 1 099 534 A2 wird ein 3D-Druckverfarhen beschrieben, das auch Puverbehälter beschreibt und Mittel das Ausfließen von Partikelmaterial über die Zeit zu steuern. Ein Verschluss ist als "valve" ausgebildet. Ein beanspruchter Verschluss wird hier nicht beschrieben.

Auch die WO2000/78485A1 betrifft ein 3D-Druckverfahren und eine Einrichtung zum Zuführen von Pulver. Allerdings beschreibt dieses Dokument im Gegensatz zu dem beanspruchten Gegenstand einen anderen Schiebemechanismus.

Die US2001/050448A1 betrifft ein 3D-Druckverfahren und einen sog. "powder spreader mechanism", wobei ein "shutter"allerdings nicht in den Vorratsbehälter einschiebbar ist, sondern er befindet sich außerhalb des Pulverreservoirs

Die US4167382 bezieht sich auf ein "roto-molding" Verfahren. Es wird zwar ein "slide gate" "40" offenbart, das die Öffnung des Pulverbehälters verschließt. Der Verschlussmechanismus ist allerdings nicht mit dem beanspruchten Mechanismus vergleichbar. AUch ist die Anordnung des Schiebers grundsätzlich anders ausgestaltet als bei der beanspruchten Erfindung.

Die US2640626 betrifft auch ein Dosierverfahren und Vorrichtung. Partikelmaterial wird hier allerdings nicht dosiert. Damit folgt der beanspruchte Gegenstand grundsätzlich einem anderen Prinzip als dieses Dokument.

Die US4627456 betrifft auch ein Dosiermittel für Partikelmaterialien, wobei diese Vorrichtung im Gegensatz zu der beanspruchten Dosiervorrichtung keinen Schieber wie beansprucht offenbart.

Das erfindungsgemäße Verfahren und Vorrichtung sind durch die obigen Dokumente des Standes der Technik weder beschrieben noch nahe gelegt.

Ein weiterer Nachteil bei aus dem Stand der Technik bekannten Vorratsbehältern ist, dass dort zumeist Brücken im Fluid bzw. Partikelmaterial, wie zum Beispiel Sand, gebildet werden, die ein weiteres Abfließen des Fluids verhindern und damit die erwünschte Partikelmaterialzufuhr in das Dosiersystem unterbrechen. Dies ist ein sehr unerwünschter Zustand, da es so vorkommen kann, dass nicht ausreichend Fluid aufgetragen wird und es dadurch beispielsweise beim Aufbau von Modellen unter Umständen zu Fehlern kommt.

Ausgehend hiervon ist es Aufgabe der vorliegenden Erfindung eine Vorrichtung bereitzustellen, mit der eine relativ genaue Dosierung des Fluids über eine definierte Länge möglich ist.

Erfindungsgemäß wird diese Aufgabe gelöst mit den folgenden Aspekten:
1. Vorrichtung zum Zuführen von Fluiden, wobei das Fluid ein Partikelmaterial (5) ist, aus einem Vorratsbehälter (6) aufweisend das Partikelmaterial, wobei über dem Vorratsbehälter (6), in Richtung weg zu einer Zuführrichtung gesehen, eine Partikelfördervorrichtung vorgesehen ist und wobei der Vorratsbehälter (6), in Zuführrichtung gesehen, oberhalb einer Dosiervorrichtung (3) einer Vorrichtung zum Aufbau von Modellen vorgesehen ist, wobei ein Schieber (7) vorgesehen ist, der aus dem Vorratsbehälter (6) zumindest teilweise heraus- und hineinbewegbar ist und in einem eingefahrenen Zustand eine an den Schieber (7) angepasste Öffnung (8) des Vorratsbehälters (6) verschließt und sich über dem Schieber (7) Partikelmaterial (5) in ausreichender Menge befindet und sobald der Schieber (7) zurückfährt fällt das Partikelmaterial (5) in die nun frei werdende Lücke, an der sich vorher der Schieber (7) befunden hat, und wenn der Schieber (7) aus dem Vorratsbehälter (6) herausgefahren ist und die Öffnung (8) im Vorratsbehälter (6) nicht mehr durch den Schieber (7) verschlossen ist, kein Partikelmaterial (5) aus der Öffnung (8) heraustritt, wobei bei geeigneter Bemessung der Öffnung (8) kein Partikelmaterial (5) heraustritt, da das Partikelmaterial (5) einen Schüttkegel in der Öffnung (8) bildet, der es am freien Ausfließen aus dem Vorratsbehälter hindert.
2.Vorrichtung nach Aspekt 1, wobei eine Breite des Schiebers (7) im wesentlichen einer Breite des Vorratsbehälters (6) entspricht.
3.Vorrichtung nach einem der vorhergehenden Aspekt, wobei oberhalb der Öffnung (8), in Richtung weg von der Beschichtungsrichtung gesehen, eine vertikal zu einer Längsachse der Öffnung (8) justierbare Blende (9) vorgesehen ist, mit der die Größe der Öffnung (8) verändert werden kann.
4.Vorrichtung nach einem der vorhergehenden Aspekte, wobei zumindest eine Wandung des Vorratsbehälters (6) nach innen weisend schräg ausgebildet ist.
5. Vorrichtung nach einem der vorhergehenden Aspekte, wobei der Vorratsbehälter (6) einen Rüttler und/oder einen Vibrator aufweist.
6.Vorrichtung nach einem der vorhergehenden Aspekte, wobei zum Bewegen des Schiebers (7) eine Pneumatik vorgesehen ist.
7.Vorrichtung nach Aspekt 1, wobei die Partikelfördervorrichtung ein eine Förderspirale (11) enthaltendes geschlitztes Förderrohr (10) aufweist.
8.Vorrichtung nach einem der vorhergehenden Aspekte, wobei im Vorratsbehälter (6) ein Füllstandssensor (13) vorgesehen ist.
9.Vorrichtung nach Aspekt 10, wobei in Zuführrichtung gesehen unterhalb des Vorratsbehälters (6) ein die Dosiervorrichtung (3) aufweisender Beschichter (1) vorgesehen ist, mit dem auf einen zu beschichtenden Bereich Partikelmaterial aufgetragen wird.
10.Verwendung der Vorrichtung nach einem der Aspekte 1 bis 9 zum Auftragen von mit Bindemittel versehenem Partikelmaterial.
11.Verwendung der Vorrichtung nach einem der Aspekte 1 bis
   9 bei einem Verfahren zum Aufbau von Gussmodellen und Gussformen.
12.Rapid Prototyping Verfahren, wobei eine Vorrichtung zum Zuführen von Partikelmaterial (5) aus einem Vorratsbehälter (6) aufweisend das Partikelmaterial verwendet wird und wobei über dem Vorratsbehälter (6), in Richtung weg zu einer Zuführrichtung gesehen, eine Partikelfördervorrichtung verwendet wird und wobei ein Vorratsbehälter (6), in Zuführrichtung gesehen, oberhalb einer Dosiervorrichtung (3) einer Vorrichtung zum Aufbau von Modellen verwendet wird und wobei ein Schieber (7) verwendet wird, der aus dem Vorratsbehälter (6) zumindest teilweise heraus- und hineinbewegbar ist und in einem eingefahrenen Zustand eine an den Schieber (7) angepasste Öffnung (8) des Vorratsbehälters (6) verschließt und sobald der Schieber (7) zurückfährt fällt das Partikelmaterial (5) in die nun frei werdende Lücke, an der sich vorher der Schieber (7) befunden hat, und wenn der Schieber (7) aus dem Vorratsbehälter (6) herausgefahren ist und die Öffnung (8) im Vorratsbehälter (6) nicht mehr durch den Schieber (7) verschlossen ist, kein Partikelmaterial (5) aus der Öffnung (8) heraustritt.

Es wird gemäß der vorliegenden Erfindung ein relativ einfacher Schiebermechanismus verwendet, der sich in einem speziell geformten Vorratsbehälter befindet. Der bauliche Aufwand ist daher gering.

Weiterhin ist eine sehr schnelle Dosierung mit der vorliegenden Erfindung möglich. Daneben ist es auch möglich, einen Mehrfachhub mit dem Schieber durchzuführen und dadurch auch größere Mengen Partikelmaterial zu dosieren.

Ein weiterer Vorteil der erfindungsgemäßen Vorrichtung ist, dass sie sehr einfach zureinigen ist. Ferner ist auch ein Spülbetrieb mit Partikelmaterial möglich.

Bei einem Rapid Prototyping Verfahren weist der Beschichter, dem das Partikelmaterial zugeführt werden soll, eine dem Baufeld entsprechende Breite auf. Es ist bei Verwendung der erfindungsgemäßen Vorrichtung somit vorteilhaft, wenn der Vorratsbehälter und auch der Schieber im wesentlichen über die gesamte Breite des Beschichters verlaufen.

Dabei könnte der Schieber beispielsweise im Wesentlichen die Form einer sehr langen Platte aufweisen und sich im Wesentlichen über die Breite des Vorratsbehälters erstrecken. Mit einer derartigen Vorrichtung ist es möglich, über eine große Breite, wie beispielsweise das ganze Baufeld einer Vorrichtung zum Aufbau von Modellen eine gleichmäßige Zufuhr von Partikelmaterial zu gewährleisten.

Oberhalb der angepassten Öffnung des Vorratsbehälters, in Richtung weg von der Beschichtungsrichtung gesehen, befindet sich gemäß einer bevorzugten Ausführungsform der Erfindung eine vertikal zur Längsachse der Öffnung justierbare Blende, mit der die Öffnung gezielt in ihrer Fläche normal zum Austritt des Fluids verändert werden kann, um damit die Menge und die Gleichmäßigkeit der abgeworfenen Fluidmenge zu beeinflussen. Diese Menge lässt sich so sowohl komplett als auch über die gesamte Länge verteilt einstellen. Es ist mit dieser Blende somit in einer sehr einfachen Art und Weise möglich, die Abwurfmenge des Fluids fein einzujustieren.

Der Schieber wird beispielsweise pneumatisch aus dem Vorratsbehälter heraus- und hineingefahren und verschließt im eingefahrenen Zustand die angepasste Öffnung des Vorratsbehälters. Das Heraus- und Hereinschieben könnte jedoch auch auf jede andere erdenkliche Art geschehen. Beispielsweise auch mittels eines Elektromotors.

Da sich über dem Schieber das Partikelmaterial in ausreichender Menge befindet, funktioniert die erfindungsgemäße Vorrichtung derart, dass der Schieber zurückfährt und dabei Sand in die dadurch frei gewordene Lücke fällt. Damit keine Brücken im Partikelmaterial entstehen, kann gemäß einer bevorzugten Ausführungsform der Erfindung die Behälterwandung schräg nach innen ausgeformt sein.

Daneben ist es auch möglich die erfindungsgemäße Vorrichtung mit einem mechanischen Rüttler und/oder Vibrator auszustatten. Durch die Bewegung werden eventuelle Anhaftungen des Fluids im Vorratsbehälter gelöst.

Über dem Vorratsbehälter ist, in Richtung weg zu einer Zuführrichtung gesehen, eine Fluidfördervorrichtung vorgesehen, um den Vorratsbehälter mit Fluid zu versorgen. Die Fluidfördervorrichtung weist vorzugsweise ein eine Förderspirale enthaltendes geschlitztes Förderrohr auf.

Dreht sich die Förderspirale, wird der Vorratsbehälter über die Schlitze von der Zuführseite her befüllt. Die Füllrichtung verläuft dabei sowohl von unten nach oben als auch von der Zuführung zur gegenüberliegenden Seite. Steht das Fluid am Förderrohr an, stoppt die Befüllung in vertikaler Richtung an dieser Stelle.

Um eine Überfüllung des Vorratsbehälters zu vermeiden, ist gemäß einer bevorzugten Ausführungsform der Erfindung noch ein Füllstandssensor im Vorratsbehälter vorgesehen. Spricht dieser an, wird die Förderspirale in Bewegung gesetzt.

Bei der erfindungsgemäßen Vorrichtung ist der Vorratsbehälter, in Zuführrichtung gesehen, oberhalb einer Dosiervorrichtung einer Vorrichtung zum Aufbau von Modellen vorgesehen.

Gemäß einer besonders bevorzugten Ausführungsform der erfindungsgemäßen Vorrichtung ist in Zuführrichtung gesehen unterhalb des Vorratsbehälters ein die Dosiervorrichtung aufweisender Beschichter vorgesehen, mit dem auf einen zu beschichtenden Bereich Fluid aufgetragen wird.

Beim Ausfahren des Schiebers wird nun eine bestimmte Menge Fluid an die Stelle treten, an der sich zuvor der Schieber in dem Vorratsbehälter befunden hat. An der Öffnung im Vorratsbehälter wird aber bei einer geeigneten Bemessung der Öffnung dennoch noch kein Fluid austreten, da das Fluid einen Schüttkegel an der Öffnung bildet, der es am freien Ausfließen aus dem Vorratsbehälter hindert. Erst wenn der Schieber danach wieder in den Vorratsbehälter eingefahren wird, tritt das Fluid aus der Öffnung im Vorratsbehälter heraus.

Insbesondere geeignet ist die erfindungsgemäße Vorrichtung zum Dosieren von mit Bindemittel versehenem Partikelmaterial, wie beispielsweise bei einem Verfahren zum Aufbau von Gussmodellen und Gussformen.

Dies trifft ebenso bei einem Beschichtungsverfahren mit zu Agglomeraten neigendem Partikelmaterial zu.

Wie schon beschrieben wurde, eignet sich die vorliegende Vorrichtung auch besonders zu einem gezielt linienförmigen Abwurf einer vorbestimmten Fluidmenge.

Weitere vorteilhafte Ausgestaltungen der vorliegenden Erfindung ergeben sich aus den Unteransprüchen sowie der Beschreibung.

Zur näheren Erläuterung wird die Erfindung anhand bevorzugter Ausführungsbeispiele nachfolgend unter Bezugnahme auf die Zeichnung näher beschrieben.

In der Zeichnung zeigt dabei:
Figur 1 eine Abfolge eines Beschichtungsverfahrens mit einer erfindungsgemäßen Vorrichtung zum Zuführen von Fluid;
Figur 2 eine genauere Ansicht einer erfindungsgemäßen Vorrichtung;
Figur 3 eine Darstellung eines Auffüllens der erfindungsgemäßen Vorrichtung; und
Figur 4 eine räumliche Darstellung der erfindungsgemäßen Vorrichtung.

Beispielhaft soll im folgenden die erfindungsgemäße Vorrichtung für den Einsatz in einer Vorrichtung zum schichtweisen Aufbau von Gussmodellen aus Partikelmaterial, Bindemittel und Härter, wie sie in der schon oben erwähnten nachveröffentlichten Patentanmeldung der Anmelderin beschrieben wird, bei einem Rapid-Prototyping-Verfahren erläutert werden.

Insbesondere soll dabei von einem schon mit Binder versehenen Partikelmaterial ausgegangen werden, das üblicherweise besonders stark zum Verklumpen neigt und daher besondere Anforderungen an das Beschichtungsverfahren und auch an die Zuführung zum Beschichter stellt.

Die Verwendung eines solchen Partikelmaterials weist jedoch den Vorteil auf, dass der üblicherweise beim Rapid-Prototyping-Verfahren notwendige Schritt des Beschichtens des Partikelmaterials mit Binder entfällt und damit das Aufbauen des Modells schneller und kostengünstiger durchgeführt werden kann.

Neben dem mit Bindemittel versehenen neigen aber beispielsweise auch Partikelmaterialien kleinerer Korngröße von weniger als 20 µm und auch Wachspulver stark zur Agglomerierung, so dass auch für Fluide das erfindungsgemäße Verfahren besonders vorteilhaft ist.

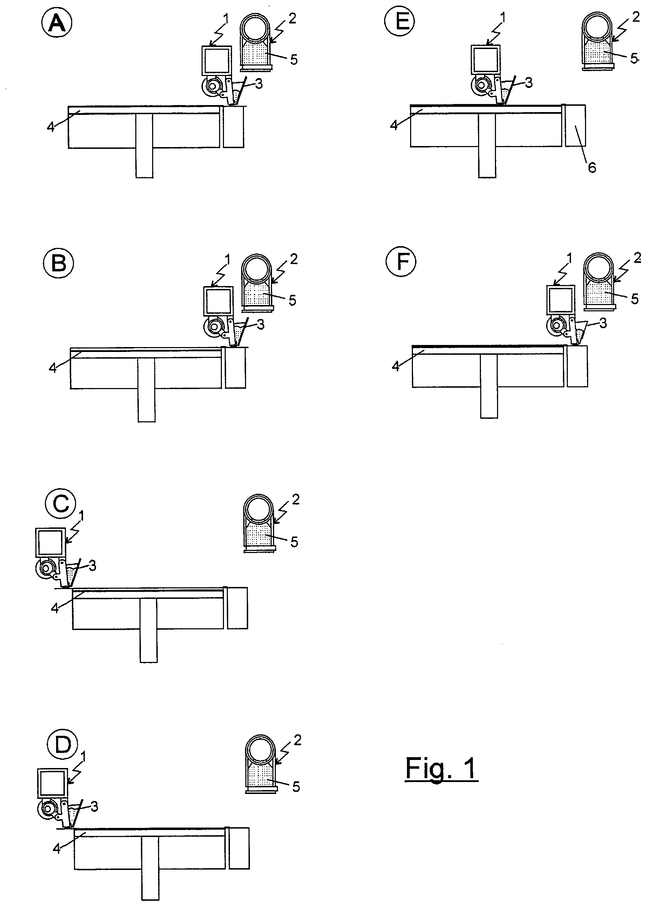

Bezugnehmend auf Figur 1 wird im Folgenden die Abfolge einer Beschichtung gemäß einer bevorzugten Ausführungsform des erfindungsgemäßen Verfahrens beschrieben.

Bei einem Aufbauverfahren eines Bauteiles, wie eines Gussmodelles, das unter Bezugnahme auf Figur 1 beschrieben wird, wird eine Bauplattform 4, auf die die Form aufgebaut werden soll, um eine Schichtstärke des Partikelmaterials 5 abgesenkt. Danach wird Partikelmaterial 5, beispielsweise Quarzsand, der beispielsweise schon mit Binder versehen ist, in einer erwünschten Schichtstärke aus einem Behälter, hier einem Trichter 3, auf die Bauplattform 4 aufgetragen. Daran schließt sich das selektive Auftragen von Härter auf auszuhärtende Bereiche an. Dies kann beispielsweise mittels eines Drop-on-demand-Tropfenerzeugers, nach Art eines Tintenstrahldruckers, durchgeführt werden. Diese Auftragungsschritte werden wiederholt, bis das fertige Bauteil, eingebettet in loses Partikelmaterial 5, erhalten wird.

Am Anfang steht der Beschichter 1 in Befüllposition, was in Figur 1 A dargestellt ist. Er wird zunächst über eine erfindungsgemäße Befüllvorrichtung 2 befüllt, wenn der Füllstandssensor ein Unterniveau in einem Dosierbehälter, der hierbei als Trichter 3 ausgebildet ist, erkannt hat.

Wie in Figur 1 B dargestellt ist, wird im Folgenden zum Aufbau eines Modelles die Bauplattform 4 um mehr als eine Schicht abgesenkt.

Danach fährt der Beschichter 1, wie in Figur 1 C gezeigt, ohne Oszillationsbewegung und damit ohne Förderwirkung in die Position gegenüber der Befüllvorrichtung 2, bis er über dem Rand der Bauplattform 4 steht.

Nun wird die Bauplattform 4 wie aus Figur 1 D ersehen werden kann, genau derart angehoben, dass der Spalt zwischen der Bauplattform 4 und der Beschichterklinge genau einer Schichthöhe entspricht.

Danach beginnt der Beschichter 1 zu oszillieren und fährt in konstanter Fahrt über die Bauplattform 4. Dabei gibt er Partikelmaterial 5 in genau der richtigen Menge ab und beschichtet die Bauplattform 4. Dies ist in Figur 1 E gezeigt.

Der Beschichter 1 steht anschließend wieder in der Ausgangsposition und kann bei Bedarf über die Befüllvorrichtung 2 neu befüllt werden. Dies ist in Figur 1 F gezeigt, die der Figur 1 A entspricht.

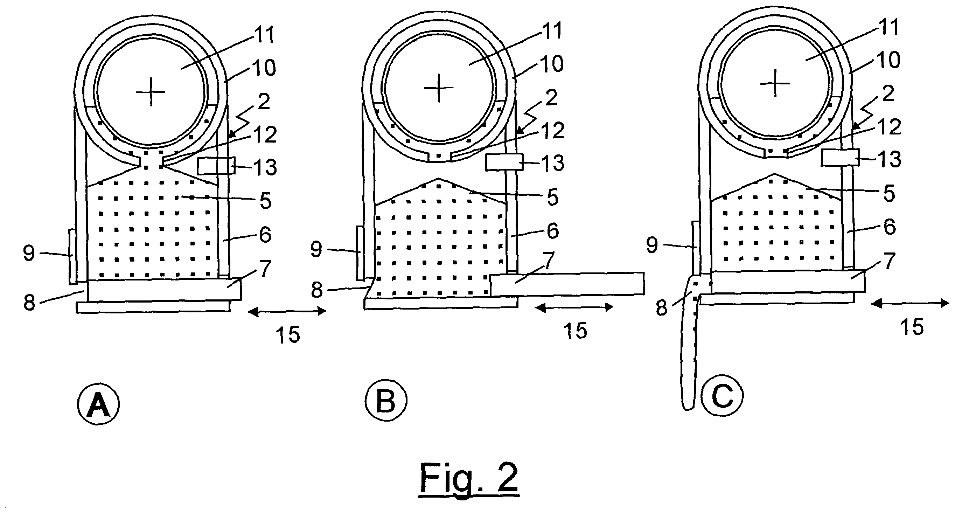

Die erfindungsgemäße Befüllvorrichtung 2 ist in Figur 2 genauer dargestellt. Sie soll, wie auch der Beschichter 1, sich im wesentlichen über die gesamte Breite der Bauplattform 4 erstrecken. In Figur 2 ist zu erkennen, dass die Befüllvorrichtung 2 einen Vorratsbehälter 6 aufweist, in dem sich das Fluid, in diesem Fall Partikelmaterial 5 befindet.

Es ist weiterhin ein durch den Vorratsbehälter 6 verlaufender Schieber 7 vorgesehen. Dieser Schieber 7 kann zumindest teilweise aus dem Vorratsbehälter 6 heraus- und in diesen hineinbewegt werden, was durch den Pfeil 15 angedeutet ist.

Der Schieber 7 verschließt in einem eingefahrenen Zustand, wie in Figur 2 A gezeigt, eine an den Schieber 7 angepasste Öffnung 8 des Vorratsbehälters 6 und über dem Schieber 7 befindet sich Partikelmaterial 5 in ausreichender Menge.

Der Schieber 7 wird gemäß der gezeigten bevorzugten Ausführungsform pneumatisch aus dem Vorratsbehälter 6 heraus- und in diesen wieder hereingefahren und verschließt im eingefahrenen Zustand die angepasste Öffnung 8 im Vorratsbehälter 6.

Fährt der Schieber 7 zurück, das heißt in Richtung aus dem Vorratsbehälter 6 hinaus, was in der Figur 2 B dargestellt ist, fällt das Partikelmaterial 5 in die nun frei werdende Lücke, an der sich vorher der Schieber 7 befunden hat.

Damit beim Herunterfallen des Partikelmaterials keine Brücken im Partikelmaterial gebildet werden, ist die Wandung des Vorratsbehälters 6 schräg nach innen ausgeformt. Dies ist in der Figur jedoch nicht zu erkennen.

Weiterhin weist der Vorratsbehälter 6 einen Rüttler auf, der in der Darstellung der Figur 2 jedoch nicht sichtbar ist und während der Dosierung betrieben wird.

In der Schieberposition, die in der Figur 2 B dargestellt ist, also wenn der Schieber 7 aus dem Vorratsbehälter 6 herausgefahren ist und die Öffnung 8 im Vorratsbehälter 6 nicht mehr durch den Schieber 7 verschlossen ist, hat es sich gezeigt, dass überraschenderweise kein Partikelmaterial 5 aus der Öffnung 8 heraustritt, da der Schüttkegel aus Partikelmaterial 5 an der Öffnung 8 für eine ausreichende Abdichtung sorgt.

Erst beim wieder Einfahren des Schiebers 7 in Richtung in den Vorratsbehälter 6 wird eine bestimmte Menge Partikelmaterial 5 aus der Öffnung 8 ausgeworfen. Dies ist in der Figur 2 C gezeigt. Diese Menge ausgeworfenen Partikelmaterials lässt sich über eine Blende 9 vor der Öffnung 8 sowohl insgesamt als auch über die Länge der Öffnung 8 verteilt einstellen, in dem die Öffnung 8 partiell verkleinert beziehungsweise vergrößert wird.

Auf dem Vorratsbehälter 6, in Richtung der Partikelauftragsrichtung gesehen, befindet sich gemäß der gezeigten bevorzugten Ausführungsform ein in Längsrichtung geschlitztes Förderrohr 10, in dem eine Förderspirale 11 eingebracht ist.

Dreht sich die Förderspirale 11, wird der Vorratsbehälter 6 über den Schlitz 12 des Förderrohrs 10 von der Zuführseite her befüllt. Die Füllrichtung verläuft dabei sowohl von unten nach oben als auch von der Zuführung zur gegenüberliegenden Seite. Steht das Partikelmaterial 5 am Förderrohr 10 an, stoppt die Befüllung in vertikaler Richtung an dieser Stelle. Um eine Überfüllung des Vorratsbehälters 6 zu vermeiden, ist nunmehr nur noch ein Füllstandssensor 13 an der Seite gegenüber der Zuführung erforderlich. Spricht dieser an, wird die Förderspirale 11 in Bewegung gesetzt.

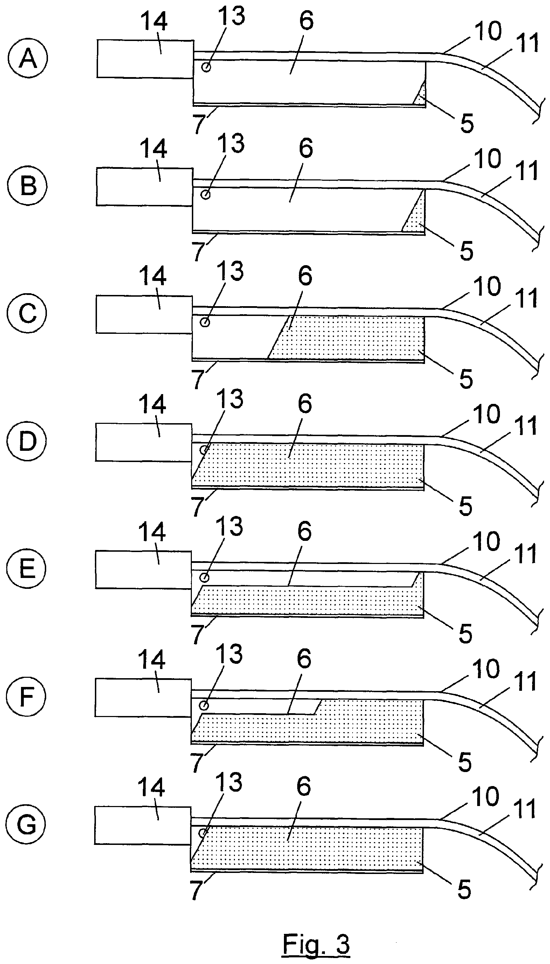

In der Figur 3 ist das Auffüllen des Vorratsbehälters 6 genauer dargestellt.

Über dem oberen offenen Rand des Vorratsbehälters 6 steht das Förderrohr 10 mit der Förderspirale 11, die von einem Lagerbehälter des Partikelmaterials 5 zum Vorratsbehälter 6 führt. Das Förderrohr 10 ist, wie schon ausgeführt wurde, in Längsrichtung über dem Vorratsbehälter 6 geschlitzt, so dass das geförderte Partikelmaterial 5 aus dem Förderrohr 10 durch den Schlitz 12 nach unten in den Vorratsbehälter 6 fällt. Dies erfolgt dabei in Form eines in Förderrichtung von links nach rechts, bzw. andersherum laufenden Schüttkegels im Vorratsbehälter 6.

Der Vorratsbehälter 6 wird dabei, wie in der Figur 3 gut zu erkennen ist, zunächst von der Eingangsseite der Förderspirale 11 her nur am Rand aufgefüllt. Sobald die volle Behälterhöhe erreicht ist, fängt die seitliche Bewegung des Schüttkegels an.

Es wurde deshalb am anderen Ende des Vorratsbehälters 6 ein Füllstandssensor 13 angebracht, um, sobald das Partikelmaterial 5 an dieser Stelle, das heißt am Füllstandssensor 13, angekommen ist, den Fördervorgang zu stoppen. Damit dann auch wirklich kein Partikelmaterial 5 bis zum Motor 14 der Förderspirale 11 vordringen kann, wird der Schlitz 12 im Förderrohr 10 durch einen breiteren Auslass abgeschlossen.

Interessant ist mit dieser Füllmethode auch die Option, den Vorratsbehälter 6 nur zum Teil zu füllen. So können auch kleinere Beschichtungsfelder in der Beschichterachse erzielt werden. Wenn nämlich der Füllstandssensor 13 in Richtung des Eingangs der Förderspirale 11 verschoben wird, stoppt die Schüttung an dieser Stelle und das Partikelmaterial wird nur bis zu dieser Stelle zugeführt.

Die Figur 3 A bis 3 D zeigt das langsame Auffüllen des Vorratsbehälters 6 über die Förderspirale 11 bis zum Abschalten der Förderspirale 11, das durch den Füllstandssensor 13 ausgelöst wird.

In der Figur 3 E bis 3 G ist das Abfallen des Partikelmaterialfüllstandes im Vorratsbehälter durch das Ausschieben des Partikelmaterials 5 mittels des Schiebers 7 im Prozess bis zum Auslösen des Füllstandssensors 13 und das anschließende Wiederbefüllen des Vorratsbehälters 6 von der rechten Seite der Figur her gesehen dargestellt.

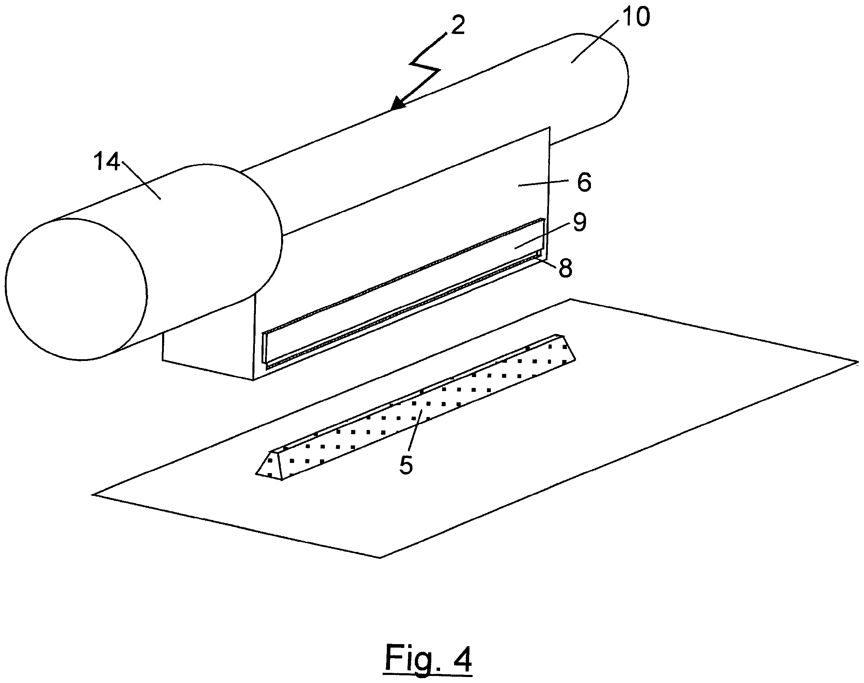

Eine räumliche Darstellung einer erfindungsgemäßen Vorrichtung ist in der Figur 4 gezeigt. In dieser Darstellung ist insbesondere gut zu erkennen, dass sich die vorliegende Vorrichtung auch besonders zu einem gezielt linienförmigen Abwurf einer vorbestimmten Fluidmenge eignet.

Üblicherweise ist ein linienförmiger Auftrag von Partikelmaterial problematisch. Hierbei ist besonders problematisch, dass eine Gesamtschichtmenge bei einem Rapid-Prototyping-Verfahren üblicherweise nur wenige hundert Gramm Partikelmaterial beträgt. Diese geringe Menge muss jedoch in gleichmäßiger Verteilung über die gesamte Beschichterbreite abgelegt werden, da eine Querverteilung des Partikelmaterials 5, wenn es einmal dem Beschichter 1 zugeführt wurde, fast nicht stattfindet. Eine derartige gleichmäßige Verteilung ist mit der erfindungsgemäßen Vorrichtung nun möglich, wie der Figur 4 zu entnehmen ist, wobei hier zur Veranschaulichung Partikelmaterial 5 auf eine Zielfläche abgelegt wurde und nicht in den Beschichter 1 eingebracht wurde.

## Patentansprüche

1. Vorrichtung zum Zuführen von Fluiden, wobei das Fluid ein Partikelmaterial (5) ist, aus einem Vorratsbehälter (6) aufweisend das Partikelmaterial, wobei über dem Vorratsbehälter (6), in Richtung weg zu einer Zuführrichtung gesehen, eine Partikelfördervorrichtung vorgesehen ist und wobei der Vorratsbehälter (6), in Zuführrichtung gesehen, oberhalb einer Dosiervorrichtung (3) einer Vorrichtung zum Aufbau von Modellen vorgesehen ist, wobei ein Schieber (7) vorgesehen ist, der aus dem Vorratsbehälter (6) zumindest teilweise heraus- und hineinbewegbar ist und in einem eingefahrenen Zustand eine an den Schieber (7) angepasste Öffnung (8) des Vorratsbehälters (6) verschließt und sich über dem Schieber (7) Partikelmaterial (5) in ausreichender Menge befindet und sobald der Schieber (7) zurückfährt fällt das Partikelmaterial (5) in die nun frei werdende Lücke, an der sich vorher der Schieber (7) befunden hat, und wenn der Schieber (7) aus dem Vorratsbehälter (6) herausgefahren ist und die Öffnung (8) im Vorratsbehälter (6) nicht mehr durch den Schieber (7) verschlossen ist, kein Partikelmaterial (5) aus der Öffnung (8) heraustritt, wobei bei geeigneter Bemessung der Öffnung (8) kein Partikelmaterial (5) heraustritt, da das Partikelmaterial (5) einen Schüttkegel in der Öffnung (8) bildet, der es am freien Ausfließen aus dem Vorratsbehälter hindert.

2. Vorrichtung nach Anspruch 1, wobei eine Breite des Schiebers (7) im Wesentlichen einer Breite des Vorratsbehälters (6) entspricht.

3. Vorrichtung nach einem der vorhergehenden Ansprüche, wobei oberhalb der Öffnung (8), in Richtung weg von der Beschichtungsrichtung gesehen, eine vertikal zu einer Längsachse der Öffnung (8) justierbare Blende (9) vorgesehen ist, mit der die Größe der Öffnung (8) verändert werden kann.

4. Vorrichtung nach einem der vorhergehenden Ansprüche, wobei zumindest eine Wandung des Vorratsbehälters (6) nach innen weisend schräg ausgebildet ist.

5. Vorrichtung nach einem der vorhergehenden Ansprüche, wobei der Vorratsbehälter (6) einen Rüttler und/oder einen Vibrator aufweist.

6. Vorrichtung nach einem der vorhergehenden Ansprüche, wobei zum Bewegen des Schiebers (7) eine Pneumatik vorgesehen ist.

7. Vorrichtung nach Anspruch 1, wobei die Partikelfördervorrichtung ein eine Förderspirale (11) enthaltendes geschlitztes Förderrohr (10) aufweist.

8. Vorrichtung nach einem der vorhergehenden Ansprüche, wobei im Vorratsbehälter (6) ein Füllstandssensor (13) vorgesehen ist.

9. Vorrichtung nach Anspruch 10, wobei in Zuführrichtung gesehen unterhalb des Vorratsbehälters (6) ein die Dosiervorrichtung (3) aufweisender Beschichter (1) vorgesehen ist, mit dem auf einen zu beschichtenden Bereich Partikelmaterial aufgetragen wird.

10. Verwendung der Vorrichtung nach einem der Ansprüche 1 bis 9 zum Auftragen von mit Bindemittel versehenem Partikelmaterial.

11. Verwendung der Vorrichtung nach einem der Ansprüche 1 bis 9 bei einem Verfahren zum Aufbau von Gussmodellen und Gussformen.

12. Rapid Prototyping Verfahren, wobei eine Vorrichtung zum Zuführen von Partikelmaterial (5) aus einem Vorratsbehälter (6) aufweisend das Partikelmaterial verwendet wird und wobei über dem Vorratsbehälter (6), in Richtung weg zu einer Zuführrichtung gesehen, eine Partikelfördervorrichtung verwendet wird und wobei ein Vorratsbehälter (6), in Zuführrichtung gesehen, oberhalb einer Dosiervorrichtung (3) einer Vorrichtung zum Aufbau von Modellen verwendet wird und wobei ein Schieber (7) verwendet wird, der aus dem Vorratsbehälter (6) zumindest teilweise heraus- und hineinbewegbar ist und in einem eingefahrenen Zustand eine an den Schieber (7) angepasste Öffnung (8) des Vorratsbehälters (6) verschließt und sobald der Schieber (7) zurückfährt fällt das Partikelmaterial (5) in die nun frei werdende Lücke, an der sich vorher der Schieber (7) befunden hat, und wenn der Schieber (7) aus dem Vorratsbehälter (6) herausgefahren ist und die Öffnung (8) im Vorratsbehälter (6) nicht mehr durch den Schieber (7) verschlossen ist, kein Partikelmaterial (5) aus der Öffnung (8) heraustritt.

## Claims

1. A device for supplying fluids, wherein the fluid is a particulate material (5), from a reservoir (6) comprising the particulate material, wherein a particle conveying device is provided above the reservoir (6), seen in a direction away from a feed direction, and wherein the reservoir (6), seen in the feed direction, is provided above a metering device (3) of a device for constructing models, wherein a slider (7) is provided which can be at least partially moved in and out of the reservoir (6) and, in a retracted state, closes an opening (8) of the reservoir (6) adapted to the slider (7) and there is sufficient particulate material (5) above the slider (7) and as soon as the slider (7) returns, the particulate material (5) falls into the gap which has now become free and at which the slider (7) was previously located, and when the slider (7) has moved out of the reservoir (6) and the opening (8) in the reservoir (6) is no longer closed by the slider (7), no particulate material (5) emerges from the opening (8), wherein no particulate material (5) emerges from the opening (8) if the opening (8) is appropriately dimensioned, since the particulate material (5) forms a material cone in the opening (8) which prevents it from freely flowing out of the reservoir.

2. The device according to claim 1, wherein a width of the slider (7) substantially corresponds to a width of the reservoir (6).

3. The device according to any one of the preceding claims, wherein above the opening (8), seen in a direction away from the coating direction, a diaphragm (9) is provided which is vertically adjustable with respect to a longitudinal axis of the opening (8) and using which the size of the opening (8) can be changed.

4. The device according to any one of the preceding claims, wherein at least one wall of the reservoir (6) is formed obliquely pointing inwards.

5. The device according to any one of the preceding claims, wherein the reservoir (6) comprises a shaker and/or a vibrator.

6. The device according to any one of the preceding claims, wherein a pneumatic system is provided for moving the slider (7).

7. The device according to claim 1, wherein the particle conveying device comprises a slotted conveying tube (10) containing a conveying spiral (11).

8. The device according to any one of the preceding claims, wherein a filling level sensor (13) is provided in the reservoir (6).

9. The device according to claim 10, wherein a coater (1) comprising the metering device (3) is provided below the reservoir (6) as seen in the feed direction, with which coater particulate material is applied onto a region to be coated.

10. Use of the device according to any one of claims 1 to 9 for applying particulate material provided with a binding agent.

11. Use of the device according to any one of claims 1 to 9 in a method for the construction of casting models and casting moulds.

12. A rapid prototyping method wherein a device for feeding particulate material (5) from a reservoir (6) comprising the particulate material is used and wherein a particulate conveying device is used above the reservoir (6), seen in a direction away from a feed direction, and wherein a reservoir (6), seen in the feed direction, is used above a dosing device (3) of a device for constructing models and wherein a slider (7) is used, which can be at least partially moved in and out of the reservoir (6) and, in a retracted state, closes an opening (8) of the reservoir (6) adapted to the slide (7), and as soon as the slide (7) returns, the particulate material (5) falls into the gap which now becomes free and at which the slider (7) was previously located, and when the slider (7) has moved out of the reservoir (6) and the opening (8) in the reservoir (6) is no longer closed by the slider (7), no particulate material (5) emerges from the opening (8).

## Revendications

1. Dispositif d'alimentation en fluides, le fluide étant un matériau particulaire (5), à partir d'un réservoir (6) comprenant le matériau particulaire, dans lequel un dispositif de transport de particules est prévu au-dessus du réservoir (6), vu dans la direction opposée à une direction d'alimentation, et dans lequel le réservoir (6), vu dans la direction d'alimentation, est prévu au-dessus d'un dispositif de dosage (3) d'un dispositif pour la construction de modèles, dans laquelle il est prévu un coulisseau (7) qui peut être introduit et sorti au moins partiellement dans le/du réservoir (6) et qui, à l'état introduit, ferme une ouverture (8) du réservoir (6) adaptée au coulisseau (7) et il y a suffisamment de matériau particulaire (5) au-dessus du coulisseau (7) et dès que le coulisseau (7) revient, le matériau particulaire (5) tombe dans l'espace qui est maintenant devenu libre et dans lequel le coulisseau (7) se trouvait auparavant, et lorsque le coulisseau (7) est sorti du réservoir (6) et l'ouverture (8) dans le réservoir (6) n'est plus fermée par le coulisseau (7), aucun matériau particulaire (5) ne sort de l'ouverture (8), aucun matériau particulaire (5) ne sortant de l'ouverture (8) si l'ouverture (8) est correctement dimensionnée, puisque le matériau particulaire (5) forme dans l'ouverture (8) un cône de déversement qui l'empêche de sortir librement du réservoir.

2. Dispositif selon la revendication 1, dans lequel une largeur du coulisseau (7) correspond sensiblement à une largeur du réservoir (6).

3. Dispositif selon l'une des revendications précédentes, dans lequel au-dessus de l'ouverture (8), vue dans la direction opposée à la direction de revêtement, est prévue une membrane (9) qui peut être ajustée verticalement par rapport à un axe longitudinal de l'ouverture (8) et par laquelle la taille de l'ouverture (8) peut être modifiée.

4. Dispositif selon l'une des revendications précédentes, dans lequel au moins une paroi du réservoir (6) est formée obliquement dirigée vers l'intérieur.

5. Dispositif selon l'une des revendications précédentes, dans lequel le réservoir (6) comprend un secoueur et/ou un vibrateur.

6. Dispositif selon l'une des revendications précédentes, dans lequel un système pneumatique est prévu pour déplacer le coulisseau (7).

7. Dispositif selon la revendication 1, dans lequel le dispositif de transport de particules comprend un tube de transport fendu (10) contenant une spirale de transport (11).

8. Dispositif selon l'une des revendications précédentes, dans lequel un capteur de niveau (13) est prévu dans le réservoir (6).

9. Dispositif selon la revendication 10, dans lequel un enducteur (1) comprenant le dispositif de dosage (3) est prévu sous le réservoir (6), vu dans la direction d'alimentation, avec lequel un matériau particulaire de revêtement est appliqué sur une région à enduire.

10. Utilisation dispositif selon l'une quelconque des revendications 1 à 9 pour l'application d'un matériau particulaire comprenant un liant.

11. Utilisation de l'appareil selon l'une quelconque des revendications 1 à 9 dans un procédé de construction de modèles et de moules.

12. Procédé de prototypage rapide dans lequel on utilise un dispositif d'alimentation en matière particulaire (5) à partir d'un réservoir (6) comprenant la matière particulaire et dans lequel on utilise un dispositif de transport de matière particulaire au-dessus du réservoir (6), vu dans la direction opposée à une direction d'alimentation, et dans lequel on utilise un réservoir (6), vu dans la direction d'alimentation, au-dessus du dispositif de dosage (3) d'un dispositif pour construire des modèles et dans lequel un coulisseau (7) est utilisé, qui peut être introduit et sorti au moins partiellement dans le/du réservoir (6) et ferme, à l'état introduit, une ouverture (8) du réservoir (6) adaptée au coulisseau (7), et dès que le coulisseau (7) revient, le matériau particulaire (5) tombe dans l'espace qui est maintenant devenu libre et dans lequel se trouvait auparavant le coulisseau (7), et lorsque le coulisseau (7) est sorti du réservoir (6) et que l'ouverture (8) du réservoir (6) n'est plus fermée par le coulisseau (7), aucun matériau particulaire (5) ne sort de l'ouverture (8).
